(19) Europäisches Patentamt
European Patent Office
Office européen des brevets

(11) EP 2 196 820 A1

(12) EUROPEAN PATENT APPLICATION

(43) Date of publication:
16.06.2010 Bulletin 2010/24

(51) Int Cl.:
G01S 13/02 (2006.01)      G01S 13/52 (2006.01)
G01S 7/41 (2006.01)

(21) Application number: 08253998.2

(22) Date of filing: 12.12.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: BAE Systems PLC
6 Carlton Gardens
London SW1Y 5AD (GB)

(72) Inventor: The designation of the inventor has not
yet been filed

(74) Representative: BAE SYSTEMS plc
Group IP Department
P.O. Box 87
Warwick House
Farnborough Aerospace Centre
Farnborough
Hampshire GU14 6YU (GB)

(54) **High frequency surfacewave radar**

(57)  A process for reducing erroneous plots when detecting targets using High Frequency surfacewave radar (HFSWR) is provided. Detection of genuine targets is thereby enhanced.

A first difference in range of an apparent target is determined, based on range data, associated with the apparent target. A second difference in range of the apparent target is determined, based on Doppler data, associated with the apparent target.

The first and second range differences are compared to one another over time to assess a consistency therebetween.

Figure 6

**Description**

The present invention relates to High Frequency surfacewave radar installations, in particular to a method for eliminating the impact of wind farms on the operation of such installations.

As the energy generation sector continues to grow in a market where environmental issues are of increasing concern, there is an increased tendency to develop and use renewable forms of energy such as harnessing tidal energy and wind energy. Consequently, the number of wind farm installations is rapidly increasing.

Wind turbines represent large structures with components such as rotor blades, being of significant magnitude. Tip portions of such rotor blades move at significant speeds which may be comparable to potential targets that can be found within a surveillance area. The impact of wind turbines on radar surveillance can be seen across different radar frequency ranges.

The impact of wind turbines to High Frequency (HF) radar is somewhat different to that experienced at microwave frequencies but is, nevertheless, problematic. The surveillance area of a High Frequency surface wave radar (HFSWR) installation is, typically, located over the sea and so it is offshore wind farms that are of particular concern in this field of technology.

Wave lengths in the High Frequency range are typically 10 to 100 metres and signals in the HF range are used to detect targets at significant distances from the radar installation. In detecting a target at roughly 150 kilometres using HFSWR large error tolerances are experienced in both range ($\pm$ 1 to 2 km) and azimuth ($\pm$ 1˚) due to limited band width availability and physical antenna size constraints. Predicting location of a target using HFSWR is, therefore, inaccurate and this lack of accuracy conventionally makes it difficult to distinguish a detected wind turbine or farm from a genuine moving target.

It is, therefore, desirable to develop a method of detecting wind turbines/farms so that they can be eliminated from the surveillance area to, thereby, improve detection of genuine targets.

According to a first aspect the present invention provides a process for reducing erroneous plots when detecting targets using High Frequency surfacewave radar (HFSWR) and thereby enhancing detection of genuine targets, the process comprising the steps of:

> determining a first difference in range of an apparent target based on range data, associated with the apparent target;
> determining a second difference in range of the apparent target based on Doppler data, associated with the apparent target; and
> comparing the first and second range differences to one another over time to assess a consistency therebetween.

By independently determining first and second differences in range, from a first time to a second time, based on range data and Doppler data respectively, a consistency between the two can be ascertained. In this way, false targets displaying ostensible velocity characteristics whilst not moving anywhere or apparently moving incongruously can be distinguished from genuine targets having consistent velocity and range characteristics.

The erroneous plots may emanate from a lone wind turbine or from a wind farm comprising a number of wind turbines.

The comparing step may be performed over a plurality of time periods, the time periods may be consecutive time periods, say four to twenty time periods. The time periods may be coherent integration times (CIT).

The comparing step may comprise normalising a difference between the first and second differences in range to yield a range consistency parameter. The range consistency parameter may be compared to a threshold value to evaluate the range consistency of the apparent target.

The apparent target may be discarded if the range consistency parameter is 4 or more and the apparent target may be considered to be a genuine target if the range consistency parameter is 2 or less.

The present invention will now be described in greater detail, by way of example only, with reference to the accompanying drawings, in which:

> Figure 1 illustrates a Doppler spectrum for a single range-azimuth cell;
> Figure 2 illustrates geographical plot display of a surveillance area at a time, M;
> Figure 3 illustrates the display of Figure 2 with additional plot data from a second time, N;
> Figure 4 represents prediction and comparison of a particular plot from time M to time N;
> Figure 5 illustrates the geographical plot display of Figure 3 showing only the tentative tracks;
> Figure 6 illustrates the display of Figure 2 with additional plot data from a third time, Q;
> Figure 7 is a flow diagram representing a process for reducing erroneous plots;
> Figure 8 illustrates a range consistency diagram for a genuine target;
> Figure 9 illustrates a range consistency diagram for a wind farm; and
> Figure 10 illustrates a range consistency diagram for clutter.

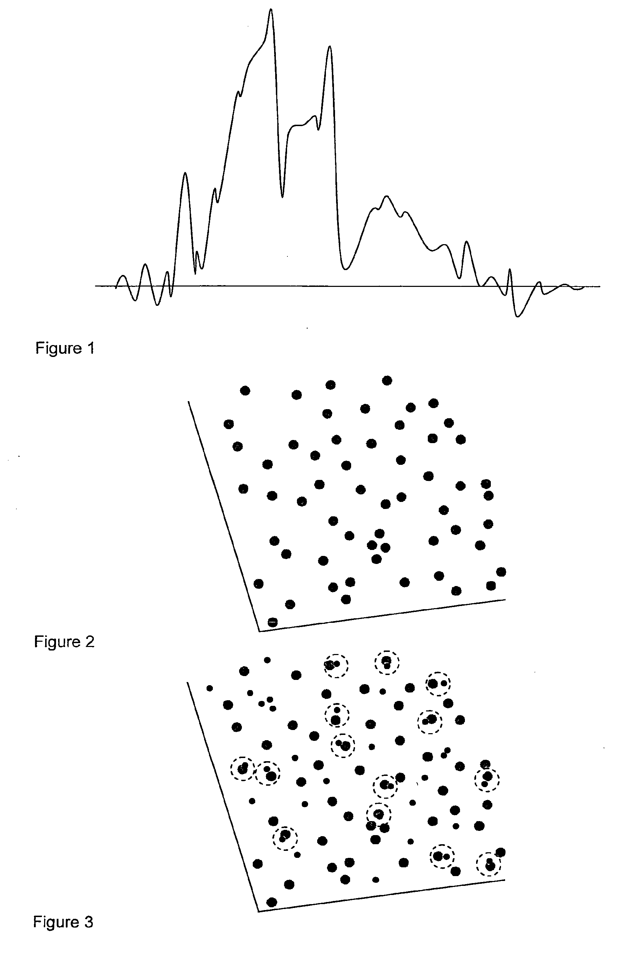

Pulses are transmitted from a radar antenna at a particular rate, for example a signal may comprise 500 pulses per second, i.e. a signal having a pulse repetition frequency (PRF) of 500 Hz. The signal is transmitted, received and processed for a set period of time, the coherent integration time (CIT), for ships this could be several minutes, say 200s. At the end of the CIT all of the information from the return signal from each of these pulses is integrated to enable a Doppler spectrum to be plotted at a particular time, say M for a particular range and azimuth. A single example Doppler spectrum is illustrated in Figure 1, however, in practice an array of such traces is established each relating to a single range azimuth cell within the radar surveillance area.

The example trace clearly comprises a number of peaks, each of which may represent a potential target. Conventional threshold techniques are applied to such traces to enable potential targets to be identified. Information that can be extracted in relation to each peak comprises range, azimuth, Doppler (i.e. the radial component of a velocity vector) and signal strength.

Plot extraction techniques are used with traces of the type shown in Figure 1, to result in a filtered set of results which are geographically displayed in Figure 2. The plot extraction technique identifies many points in the surveillance area that may represent potential targets at the time M, each such "point" is referred to as a "plot". Each plot is identified as a result of an accumulation and rationalisation of data from a number of overlapping cells which, when combined, represent the totality of the surveillance area. Whilst a number of potential targets are schematically represented in Figure 2, such a diagram may, typically, comprise in the region of 1000 potential targets or plots, a high proportion of which are false alarms.

In HF radar, simplistic threshold techniques can result in many targets being discarded as the clutter and external noise/interference may dominate the genuine signals. Consequently, thresholds are set low such that plot extraction techniques, if used alone, result in many false alarms.

Tracking techniques repeat the plot extraction process over time. For example, at the end of a subsequent time interval (CIT) say N, a further plot extraction step may be performed and the plots may be superposed as shown in Figure 3. Some potential targets identified at time M are clearly not identified at time N and so these potential targets or plots are not reinforced and can, therefore, be discarded as representing false alarms in the previous diagram.

The remaining plots (represented by a dashed line in Figure 3) that comprise a potential target at time N, each of which is substantially co-located with a potential target identified at time M, fall within a number of categories:

1) a genuine target
2) a static object such as a wind turbine having moving rotors and, therefore, a Doppler output
3) a static object with no moving parts and, therefore, no Doppler output
4) multiple incidences of clutter which, by coincidence, happen to be located at substantially the same place.

The location of each potential target identified is represented by a nominal range and azimuth. However, error tolerances experienced in radar at the High Frequency range in particular are significant. For example, a target located at a distance of approximately 150 kilometres may show inaccuracies of approximately $\pm$ 1 to 2 kilometres in range and approximately $\pm$ 1˚ in azimuth. Consequently, a static target such as a wind turbine may, in one geographic display appear in one place and in a second display the same static target could appear to be up to two kilometres away at a different azimuth location. As such, the turbine could be considered to be a moving target, moving from a first erroneous location to a second erroneous location each location being covered by the not insubstantial error tolerance. Conversely, even if the range of an apparent target at time N is shown to be the same as at a previous time, M, the known error could mean that the target is 1-2 km away from the original location from the previous update. Hence, a genuine target could give the impression of representing a static, false, target.

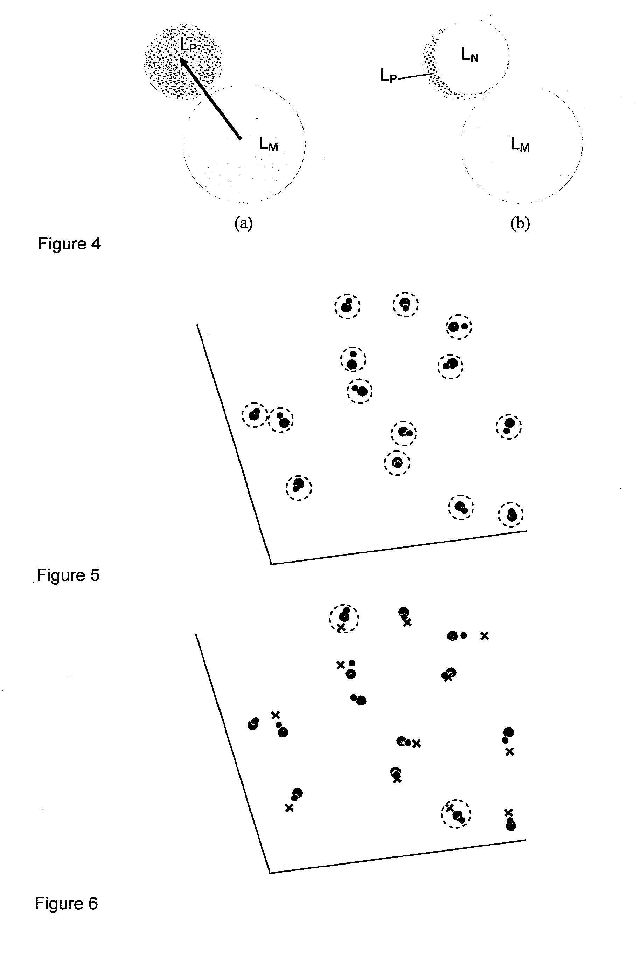

When each potential target is identified at an initial time, M, certain information can be ascertained from the original return data. This information includes range, azimuth, Doppler (radial component of velocity vector) and signal strength data from which, the current location $L_M$ and a predicted position $L_P$ for the apparent target at a subsequent time N can be established as illustrated in Figure 4a. Once an array of Doppler spectra (at time N) has been established, potential targets identified from the latter array at locations $L_N$ can be compared to the predicted locations $L_P$ of each apparent target from the earlier information (time M) as illustrated in Figure 4b. If a second target is not identified at the predicted location $L_P$ (or within a tolerance thereof) the apparent target can be discarded. The remaining apparent targets are referred to as "tentative tracks". Figure 5 represents a geographic display showing only these tentative tracks.

The prediction and comparing technique is carried out by a standard model, for example by a Kalman filter. Conventionally, such a model is applied across two consecutive CIT.

Doppler readings from a wind turbine are due to the motion of the rotor blades, and are particularly notable when such motion is oriented directly towards or away from the radar installation. Consequently, the possibility of a genuine moving target is suggested. Prediction techniques estimate potential locations that the apparent target should move to. Over a number of intervals, given the Doppler radial velocity component, it becomes clear that the apparent target does not follow an anticipated, realistic trajectory.

Indeed, over a sufficiently long period of time, say 30 minutes, it becomes clear that some targets apparently vacillate about a particular location rather than travelling a distance consistent with the Doppler reading. Such vacillatory behaviour is not typical of any genuine target and can, therefore, ultimately be identified as being false. Figure 6 represents a further diagram where "x" represents plots identified at a later time, Q. The dashed circles illustrate two locations that may represent wind farms as the subsequently plotted apparent targets do not display consistent trajectory data.

Additional rules, constraints and/or filters can be implemented to automatically identify such characteristics so that false targets can be discarded without operator intervention. Wind turbines cannot be detected from one "update" to the next as the error bounds overlap to an extent whereby the potential target could easily be genuine. A longer timescale range consistency check is, therefore, required.

The change in range of an apparent target can be calculated in two different ways. Firstly, the range of the target can be directly ascertained from the return data at each time, say $R_M$ and $R_N$, and a difference therebetween can be ascertained:

$$R_1 = R_N - R_M$$

Secondly, the radial velocity $\dot{r}$ (identified by the Doppler reading) can be integrated across the time interval, from $M$ to $N$, to result in a change in range of the apparent target from one interval to the next:

$$R_2 = t_{update} \cdot \sum_{i=M}^{N} \dot{r}_i$$

An error, σ, associated with each change in range $R_1$ and $R_2$ can be determined.

$$\sigma_{R_1} = \sqrt{\sigma_{R_N}^2 + \sigma_{R_M}^2}$$

$$\sigma_{R_2} = \sqrt{(N-M) \cdot \overline{\sigma}_{\dot{r}}^2 \cdot t_{update}^2}$$

$$\sigma_{R_2} = \sqrt{(N-M)} \cdot \overline{\sigma}_{\dot{r}} \cdot t_{update}$$

where

$\overline{\sigma}_{\dot{r}}$ is the mean standard deviation of the range rate measurement over the (N-M) measurements
and

$t_{update}$ is the time between updates.

The two estimates of the change in range can be compared

$$S = |R_1 - R_2|$$

The magnitude of this difference value, S, can be normalised by the standard deviation, resulting in a range consistency parameter, D

$$D = \frac{S}{\sqrt{\sigma_{R_1}^2 + \sigma_{R_2}^2}}$$

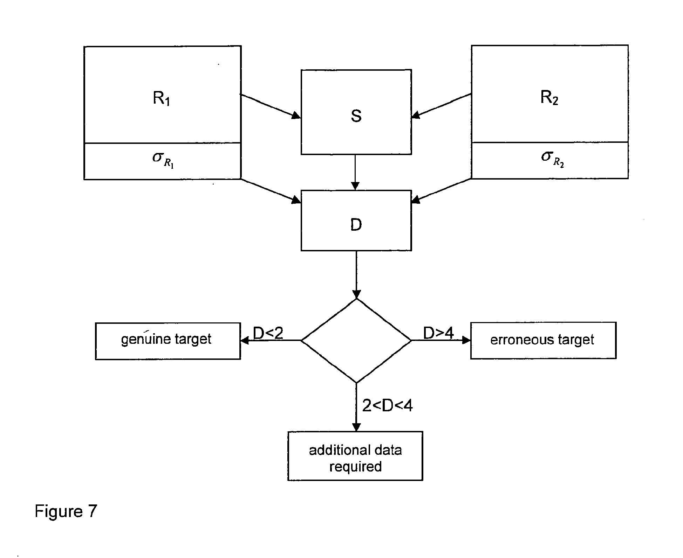

The range consistency parameter, D, can be used to verify the range consistency of the track. If consistency is established then it can be assumed that the phenomenon being tracked is a genuine target. A flow diagram representing this process is illustrated in Figure 7.

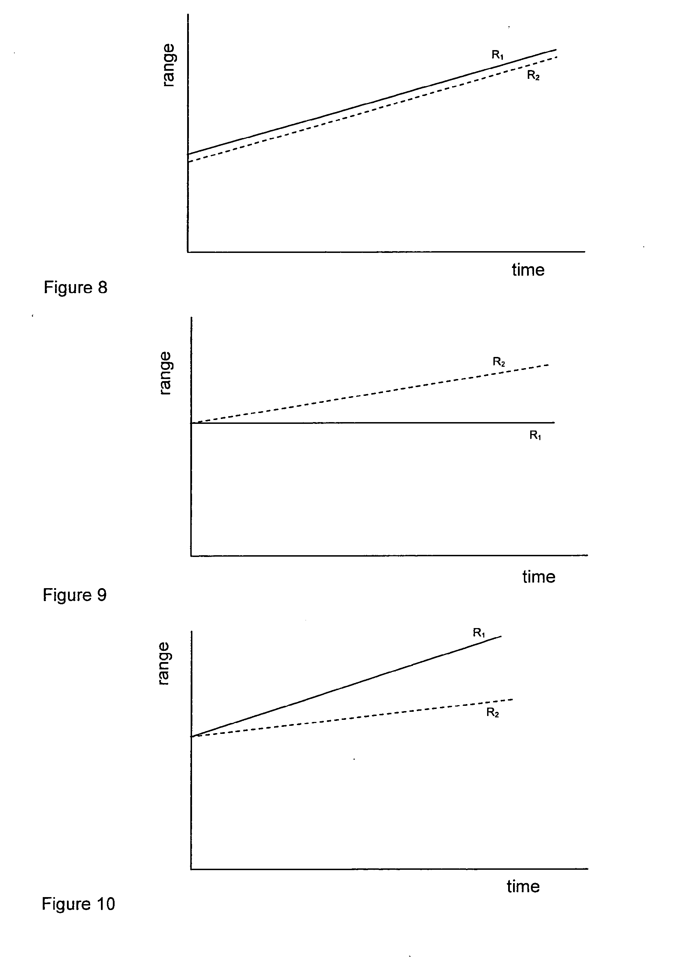

Figure 8 illustrates a schematic representation of a track of a genuine target. The two measures of change in range $R_1$ and $R_2$ vary substantially in line with one another as that derived from the Doppler is consistent with that derived directly from the range measurement.

Figure 9 illustrates a schematic representation of a "track" of a wind turbine. The change in range determined directly from the range data, $R_1$, remains substantially static over time as no physical change is experienced by the wind farm/turbine. However, a Doppler value is returned to the radar such that a change in range $R_2$, based on the Doppler value does vary in some way, in this example it is illustrated as an increasing tendency. Consequently, the differences between $R_1$ and $R_2$ accumulate over time such that the $R_1$ line diverges from the $R_2$ line and the magnitude of the range consistency parameter, $D$, increases.

In contrast, clutter present in the surveillance area is unlikely to remain at a fixed location. Co-located clutter, identified at consecutive time intervals (CIT), can be generated by quite remotely located incidents. However, due to the aforementioned errors associated with HF radar, these discrete incidents may be located 1-2 km away from one another and still be regarded as a potential coherent target. The change in range determined directly from the range data $R_1$ for this type of clutter varies accordingly, for example as illustrated in Figure 10. It is highly likely that the change in range $R_2$, based on the respective Doppler values of each clutter return will not be consistent with that determined directly from the range data $R_1$. Indeed, the Doppler values associated with the clutter may be nil. Consequently, the $R_2$ line diverges from the $R_1$ line over time and the magnitude of the range consistency parameter, $D$, increases.

The graphs illustrated in Figures 8 to 10 are shown as straight lines, however, these simply represent the schematic trends, the actual data varies from the linear trace represented.

If $D$ has a value of less than 2 the target can be considered to be genuine and is retained. If the value of $D$ is greater than 4 the target is likely to be erroneous and can, therefore, be discarded or at least minimised. If, however the value of $D$ lies in the range $2<D<4$ then further track data is required to confirm the status of the apparent target so that it may be further categorised. The range consistency of the track can be established in four or five updates. If more data is available the results are more robust, preferably the data from 10 to 20 updates are used.

The locations of wind farms are known, however, there remains a need to track targets that pass close to or over or through these locations and so it is necessary to continue to monitor these locations to detect targets.

In practice, HF radar 'sees' a wind farm as a cluster of moving targets each potentially having an associated Doppler value. However, as each turbine does not actually move location, the tracks remain totally radial as no azimuth shift is detected. Any estimate of a related velocity vector remains radial with respect to the radar installation which, in itself, suggests that a non-genuine target is being detected.

**Claims**

1. A process for reducing erroneous plots when detecting targets using High Frequency surfacewave radar (HFSWR) and thereby enhancing detection of genuine targets, the process comprising the steps of:

   determining a first difference in range of an apparent target based on range data, associated with the apparent target;
   determining a second difference in range of the apparent target based on Doppler data, associated with the apparent target; and
   comparing the first and second range differences to one another over time to assess a consistency therebetween.

2. A process according to Claim 1, wherein the erroneous plots emanate from a wind turbine.

3. A process according to Claim 2, wherein the erroneous plots emanate from a wind farm.

4. A process according to any preceding claim, wherein the comparing step is performed over a plurality of time periods.

5. A process according to Claim 4, wherein the comparing step is performed over a plurality of consecutive time periods.

6. A process according to Claim 5, wherein the comparing step is performed over between four and twenty time periods.

7. A process according to any of Claims 4 to 6, wherein the time periods are coherent integration times (CIT).

8. A process according to any preceding claim, wherein the comparing step comprises normalising a difference between the first and second differences in range to yield a range consistency parameter.

9. A process according to Claim 8, wherein the comparing step comprises comparing the range consistency parameter to a threshold value to evaluate the range consistency of the apparent target.

**10.** A process according to Claim 8 or 9, wherein the apparent target is discarded if the range consistency parameter is 4 or more.

**11.** A process according to Claim 8 or 9, wherein the apparent target is considered to be a genuine target if the range consistency parameter is 2 or less.

Figure 1

Figure 2

Figure 3

$L_P$

$L_M$

(a)

$L_N$

$L_P$

$L_M$

(b)

Figure 4

Figure 5

Figure 6

Figure 7

Figure 8

Figure 9

Figure 10

Europäisches
Patentamt

European
Patent Office

Office européen
des brevets

## EUROPEAN SEARCH REPORT

Application Number

EP 08 25 3998

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BUTLER M M ET AL: "FEASIBILITY OF MITIGATING THE EFFECTS OF WINDFARMS ON PRIMARY RADAR ETSU W/14/00623/REP DTI PUB URN No. 03/976" INTERNET CITATION, [Online] 9 June 2003 (2003-06-09), page Complete, XP007908306 Retrieved from the Internet: URL:http://www.berr.gov.uk/energy/sources/ renewables/publications/page178 83.html> [retrieved on 2009-04-23] Section A.8.7 | 1-6,8,9 | INV. G01S13/02 G01S13/52 G01S7/41 |
| Y | Section A.8.7 | 1-6,8,9 | |
| A | * the whole document * ----- | 7,10,11 | |
| Y | US 6 121 919 A (AMEEN YASHWANT K [US] ET AL) 19 September 2000 (2000-09-19) column 7, line 38 - column 7, line 40 column 10, line 15 - column 10, line 43 ----- | 1-6,8,9 | |
| A | RIDDOLLS ET AL: "Effects of Wind Turbines on High Frequency Surface Wave Radar" INTERNET CITATION, 1 December 2005 (2005-12-01), XP009114924 [retrieved on 2009-04-02] Section 3 ----- -/-- | 1-11 | TECHNICAL FIELDS SEARCHED (IPC) G01S |

The present search report has been drawn up for all claims

| Place of search | Date of completion of the search | Examiner |
|---|---|---|
| Munich | 24 April 2009 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 08 25 3998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROYAL AIR FORCE-AIR WARFARE CENTRE: "THE EFFECTS OF WIND TURBINE FARMS ON AIR DEFENCE RADARS" INTERNET CITATION, [Online] vol. AWC/WAD/72/652/TRIALS, 6 January 2005 (2005-01-06), page 32pp, XP009114914 Retrieved from the Internet: URL:http://www.bwea.com/pdf/AWG_Reference/ 050106%20RAF%20Report%20on%20wi nd%20turbines%20and%20air%20defence%20rada rs.pdf> * the whole document * ----- | 1-11 | |
| A | LEES M L: "An Overview of Signal Processing for Over-the-Horizon Radar" PROCEEDINGS OF THE IASTED INTERNATIONAL CONFERENCE SIGNAL AND IMAGE PROCESSING,, vol. 1, 1 January 1987 (1987-01-01), pages 491-494, XP009114827 * the whole document * ----- | 1-11 | |
| A | US 2003/142011 A1 (ABRAMOVICH YURI [AU] ET AL) 31 July 2003 (2003-07-31) * figure 6 * ----- | 1-11 | TECHNICAL FIELDS SEARCHED (IPC) |
| A | RALPH A P: "DATA PROCESSING FOR A GROUNDWAVE HF RADAR" GEC JOURNAL OF RESEARCH, GEC MARCONI RESEARCH CENTER. GREAT BADDOW CHEMSFORD, GB, vol. 6, no. 2, 1 January 1988 (1988-01-01), pages 96-105, XP000065320 ISSN: 0264-9187 * the whole document * ----- -/-- | 1-11 | |

The present search report has been drawn up for all claims

| Place of search | Date of completion of the search | Examiner |
|---|---|---|
| Munich | 24 April 2009 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 08 25 3998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MONEY D G ET AL: "HF SURFACE WAVE RADAR MANAGEMENT TECHNIQUES APPLIED TO SURFACE CRAFT DETECTION"<br>THE RECORD OF THE IEEE 2000 INTERNATIONAL RADAR CONFERENCE. ALEXANDRIA, VA, MAY 7-12, 2000; [IEEE RADAR CONFERENCE], NEW YORK, NY : IEEE, US,<br>7 May 2000 (2000-05-07), pages 110-115, XP001175444<br>ISBN: 978-0-7803-5777-8<br>* the whole document *<br>----- | 1-11 | |

**TECHNICAL FIELDS SEARCHED (IPC)**

The present search report has been drawn up for all claims

| Place of search | Date of completion of the search | Examiner |
|---|---|---|
| Munich | 24 April 2009 | Rudolf, Hans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 08 25 3998

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2009

| Patent document cited in search report | | Publication date | Patent family member(s) | | Publication date |
|---|---|---|---|---|---|
| US 6121919 | A | 19-09-2000 | AU | 6463600 A | 13-02-2001 |
| | | | EP | 1198721 A1 | 24-04-2002 |
| | | | WO | 0107931 A1 | 01-02-2001 |
| | | | US | 6317076 B1 | 13-11-2001 |
| US 2003142011 | A1 | 31-07-2003 | AU | 2002302072 B2 | 07-08-2008 |
| | | | AU | 2008243179 A1 | 04-12-2008 |
| | | | CA | 2411615 A1 | 12-05-2003 |
| | | | FR | 2833356 A1 | 13-06-2003 |
| | | | FR | 2859538 A1 | 11-03-2005 |
| | | | GB | 2387053 A | 01-10-2003 |
| | | | TR | 200202501 A2 | 21-07-2003 |

EPO FORM P0459

For more details about this annex : see Official Journal of the European Patent Office, No. 12/82